# EUROPEAN PATENT APPLICATION

(11) **EP 2 711 234 A1**
(43) Date of publication of application: **26.03.2014**
(21) Application number: 11865871.5
(22) Date of filing: 19.05.2011
(51) Int. Cl.: B60L 11/18, H02J 7/00

(54) **VEHICLE POWER-SUPPLY DEVICE**

(71) Applicant: Toyota Jidosha Kabushiki Kaisha, Toyota-shi, Aichi 471-8571 (JP)
(72) Inventor: ICHIKAWA, Shinji, Toyota-shi Aichi 471-8571 (JP)
(74) Representative: Winter, Brandl, Fürniss, Hübner, Röss, Kaiser, Polte - Partnerschaft
(86) International application number: PCT/JP2011/061551
(87) International publication number: WO 2012/157116

(57) **Abstract**

A power supply device for a vehicle includes a power storage device (4), a connector (34) to which a power cable can be connected from outside of the vehicle, an inverter (2) for operating a rotating electric machine, a coil (L1; L2; L12) provided separately from a stator coil of the rotating electric machine, and a connection switching unit (3; 3A; 3B; 3C) switching connection relations among the power storage device, the connector, the inverter, and the coil. In a first operation mode, the connection switching unit sets the connection relation such that electric power from the power storage device is supplied to the inverter and the rotating electric machine can be driven without using the coil, and in a second operation mode, the connection switching unit sets the connection relation such that the coil and the inverter are used to constitute a voltage conversion circuit and voltage conversion can be performed between a voltage of the connector and a voltage of the power storage device.

## Description

### TECHNICAL FIELD

The present invention relates to a power supply device for a vehicle, and in particular to a power supply device for a vehicle capable of supplying electric power to the outside of the vehicle or being charged from the outside of the vehicle.

### BACKGROUND ART

Electric vehicles/plug-in hybrid vehicles have been attracting attention for the purpose of reducing greenhouse gas. To expand the use of these vehicles, it is necessary to reduce the number of parts for cost reduction. Further, reducing the number of parts is also important in terms of improving energy efficiency by reducing vehicle weight.

Japanese Patent Laying-Open No. 06-217416 (PTD 1) discloses a reconfigurable inverter device which utilizes an in-vehicle inverter of an electric vehicle as a power converter (buck chopper circuit) for external charging to charge an in-vehicle battery. Thereby, the number of parts can be reduced when compared with a case where a power converter for external charging is added.

### CITATION LIST

### PATENT DOCUMENT

PTD 1: Japanese Patent Laying-Open No. 06-217416
PTD 2: Japanese Patent Laying-Open No. 09-065666

### SUMMARY OF INVENTION

### TECHNICAL PROBLEM

In recent years, a smart grid which incorporates an electric vehicle/plug-in hybrid vehicle as a portion thereof has also been under consideration.

In the smart grid, electric power is charged into the electric vehicle/plug-in hybrid vehicle in a time zone in which there is a surplus in the amount of electric power generated by an electric power provider, and electric power is discharged from the electric vehicle/plug-in hybrid vehicle at the peak of electric power demand.

Further, it has also been under consideration to charge electric power generated from natural energy obtained on the ground such as solar power and wind power into a storage battery of an electric vehicle or the like connected to an outlet.

When the electric vehicle/plug-in hybrid vehicle is used for such an application, it is necessary to select a charge circuit or a discharge circuit depending on magnitudes of an external voltage and the voltage of the storage battery.

One object of the present invention is to provide a power supply device for a vehicle capable of being charged from the outside or supplying electric power to the outside while suppressing an increase in the number of parts.

### SOLUTION TO PROBLEM

In summary, the present invention is directed to a power supply device for a vehicle, including a power storage device, a connector to which a power cable can be connected from outside of the vehicle, an inverter for operating a rotating electric machine, a coil provided separately from a stator coil of the rotating electric machine, and a connection switching unit switching connection relations among the power storage device, the connector, the inverter, and the coil. In a first operation mode, the connection switching unit sets the connection relation such that electric power from the power storage device is supplied to the inverter and the rotating electric machine can be driven without using the coil, and in a second operation mode, the connection switching unit sets the connection relation such that the coil and the inverter are used to constitute a voltage conversion circuit and voltage conversion can be performed between a voltage of the connector and a voltage of the power storage device.

Preferably, the power supply device for the vehicle further includes a positive power line and a negative power line supplying electric power to the inverter. The inverter includes arms of a plurality of phases connected in parallel between the positive power line and the negative power line. Each of the arms of the plurality of phases has first and second switching elements connected in series between the positive power line and the negative power line. The connection switching unit includes a first switch which causes, when the first switch becomes conductive in the second operation mode, one end of the coil to be connected to an intermediate node of the first and second switching elements of a first arm of the arms of the plurality of phases, and the other end of the coil to be connected to the power storage device or the connector. When the first switch becomes nonconductive in the first operation mode, the coil does not constitute the voltage conversion circuit.

More preferably, the first switch is provided between the other end of the coil and a positive electrode of the power storage device, and the connection switching unit further includes a second switch provided between the positive power line and the positive electrode of the power storage device. The power supply device for the vehicle further includes a control device which controls the first switch to be in an OFF state and controls the second switch to be in an ON state in the first operation mode, and controls the first switch to be in an ON state and controls the second switch to be in an OFF state in the second operation mode.

Further preferably, the connection switching unit further includes a third switch provided between the positive power line and a positive terminal of the connector, and a fourth switch provided between the negative power line and a negative terminal of the connector. The control device causes the third and fourth switches to become conductive in the second operation mode.

More preferably, the first switch is provided between the other end of the coil and a positive terminal of the connector. The power supply device for the vehicle further includes a control device which controls the first switch to be in an OFF state in the first operation mode, and controls the first switch to be in an ON state in the second operation mode.

Further preferably, the connection switching unit further includes a second switch provided between the negative power line and a negative terminal of the connector. The control device causes the second switch to become conductive in the second operation mode.

Preferably, the power supply device for the vehicle further includes a control device which controls the connection switching unit. The control device switches whether to cause the voltage conversion circuit to operate as a boost circuit or as a buck circuit, based on the voltage of the connector and the voltage of the power storage device.

More preferably, the control device switches whether to form the boost circuit or the buck circuit using the coil and the inverter, based on the voltage of the connector and the voltage of the power storage device.

More preferably, the power supply device for the vehicle further includes a second coil provided separately from the stator coil of the rotating electric machine and the coil, and a positive power line and a negative power line supplying electric power to the inverter. The inverter includes arms of a plurality of phases connected in parallel between the positive power line and the negative power line. Each of the arms of the plurality of phases has first and second switching elements connected in series between the positive power line and the negative power line. The connection switching unit includes a first switch which causes, when the first switch becomes conductive in the second operation mode, one end of the coil to be connected to an intermediate node of the first and second switching elements of a first arm of the arms of the plurality of phases, and the other end of the coil to be connected to the power storage device, and a second switch which causes, when the second switch becomes conductive in the second operation mode, one end of the second coil to be connected to an intermediate node of the first and second switching elements of a second arm of the arms of the plurality of phases, and the other end of the second coil to be connected to the connector. When the first and second switches become nonconductive in the first operation mode, no current flows to the coil and the second coil.

### ADVANTAGEOUS EFFECTS OF INVENTION

According to the present invention, a power supply device for a vehicle capable of being charged from the outside or supplying electric power to the outside while suppressing an increase in the number of parts can be provided.

### BRIEF DESCRIPTION OF DRAWINGS

Fig. 1 is a circuit diagram showing a configuration of an electric power system to which a power supply device for a vehicle in accordance with the present invention is connected.
Fig. 2 is a circuit diagram showing a configuration of a power supply device for a vehicle in Embodiment 1.
Fig. 3 is a flowchart for illustrating control executed by a control device 30 in Fig. 2.
Fig. 4 is a circuit diagram showing a configuration of a power supply device for a vehicle in Embodiment 2.
Fig. 5 is a circuit diagram showing a configuration of a first example of a power supply device for a vehicle in Embodiment 3.
Fig. 6 is a circuit diagram showing a configuration of a second example of the power supply device for the vehicle in Embodiment 3.
Fig. 7 is a flowchart for illustrating control executed by a control device 30C in Fig. 6.
Fig. 8 is a circuit diagram showing a configuration of a first variation for increasing the capacity of electric power.
Fig. 9 is a circuit diagram showing a configuration of a second variation for increasing the capacity of electric power.
Fig. 10 is a circuit diagram showing a configuration of a third variation for increasing the capacity of electric power.

### DESCRIPTION OF EMBODIMENTS

Hereinafter, embodiments of the present invention will be described in detail with reference to the drawings. It is noted that identical or corresponding parts in the drawings will be designated by the same reference numerals, and the description thereof will not be repeated.

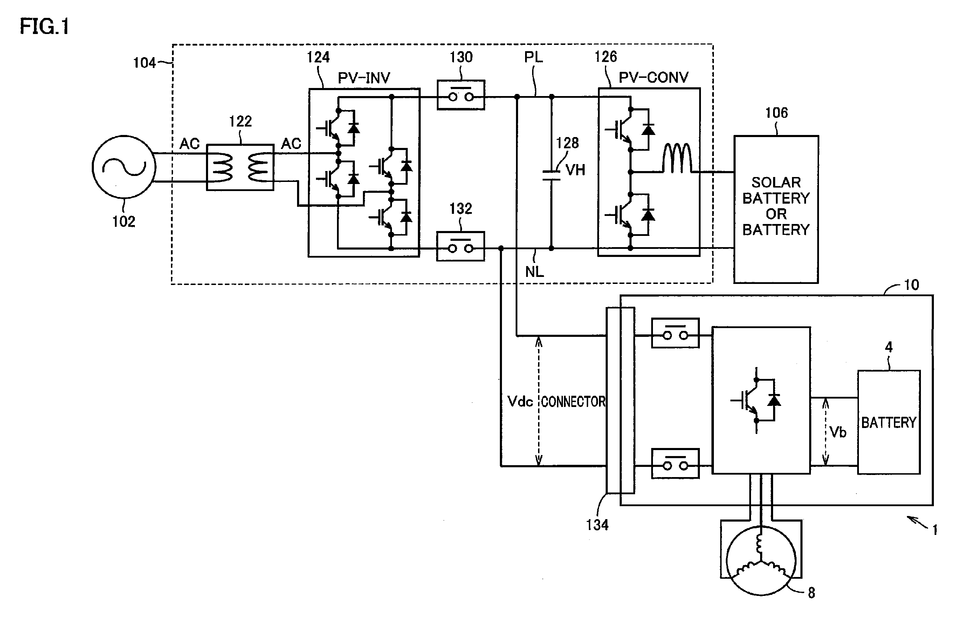

Fig. 1 is a circuit diagram showing a configuration of an electric power system to which a power supply device for a vehicle in accordance with the present invention is connected.

Referring to Fig. 1, the electric power system includes a solar battery or a storage battery (hereinafter simply referred to as a "battery") 106, and a power conditioner 104 provided between a commercial alternating current (AC) power supply 102 and battery 106.

Power conditioner 104 includes an AC transformer 122 having a secondary side connected to commercial AC power supply 102, a PV-inverter 124 connected to a primary side of AC transformer 122, relays 130, 132 connecting PV-inverter 124 to power lines PL, NL, respectively, and a capacitor 128 connected between power line PL and power line NL. The voltage of capacitor 128, that is, the voltage between power line PL and power line NL, will be referred to as a voltage VH.

Power conditioner 104 further includes a PV-converter 126 performing voltage conversion between the voltage of battery 106 and voltage VH. When battery 106 is a solar battery, PV-converter 126 boosts the voltage of battery 106, for example from 200 V to 400 V, and outputs it to power lines PL, NL.

A connector 134 is connected to power lines PL, NL. Connector 134 is a connection point for supplying and receiving direct current (DC) electric power to and from a vehicle 1. When electric power is charged into a battery 4 of the vehicle, voltage VH is output from connector 134 as a DC link voltage Vdc to be supplied to the vehicle. Further, when electric power is drawn from battery 4 of the vehicle, DC link voltage Vdc is input from the vehicle to connector 134.

Vehicle 1 is mounted with a power supply device 10 for the vehicle including chargeable/dischargeable battery 4, which will be described in detail later. Upon receiving power supply from power supply device 10 for the vehicle, an inverter drives a running motor 8.

In the present embodiment, the inverter which drives motor 8 is arranged between connector 134 and battery 4 to be used for power conversion for charging electric power from the outside of the vehicle to battery 4 and supplying electric power from battery 4 to the outside of the vehicle.

On this occasion, a number of switches (or relays) are required to completely decouple motor 8 from the inverter and recombine the inverter to constitute a voltage conversion circuit. In this case, additional cost is increased.

Further, when a switch fails, the motor and the inverter may be fixed in an unconnected state and there is a possibility that the vehicle cannot run. Therefore, it is desirable not to provide a switch in a connection path between the motor and the inverter.

### [Embodiment 1]

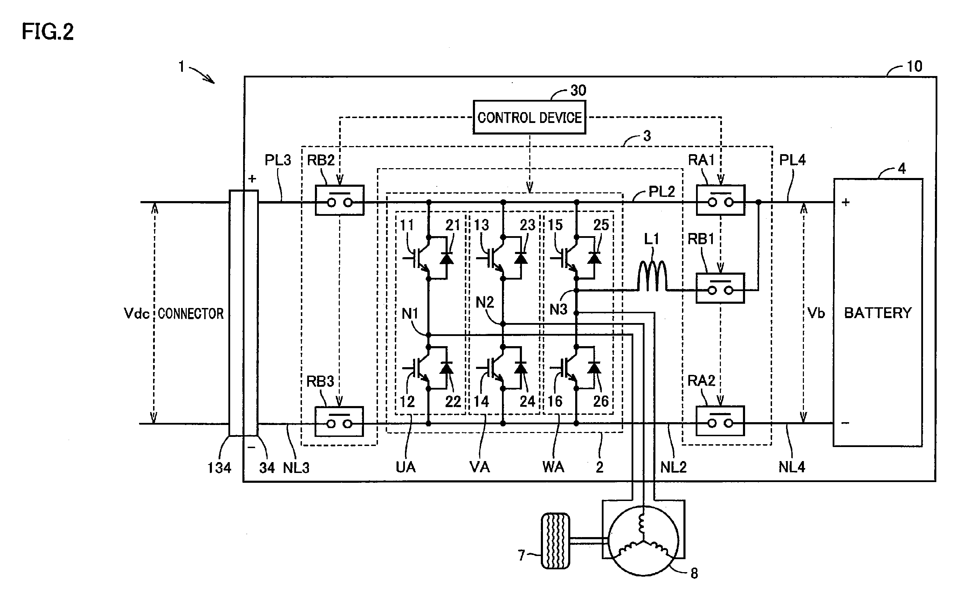

Fig. 2 is a circuit diagram showing a configuration of a power supply device for a vehicle in Embodiment 1. The power supply device for the vehicle in Embodiment 1 is used in a case where the in-vehicle battery has a voltage Vb lower than DC link voltage Vdc in Fig. 1.

Referring to Fig. 2, vehicle 1 includes power supply device 10 for the vehicle, motor 8 receiving power supply from power supply device 10 for the vehicle, and wheels 7 rotating according to the rotation of motor 8.

Power supply device 10 for the vehicle includes a connector 34 for connecting to connector 134 in Fig. 1, relays RB2, RB3 for connecting power lines PL3, NL3 connected to connector 34 to power lines PL2, NL2, respectively, and an inverter 2 connected to power lines PL2, NL2.

Power supply device 10 for the vehicle further includes relays RA1, RA2 for connecting power lines PL2, NL2 to power lines PL4, NL4, respectively, and battery 4 having a positive electrode and a negative electrode to which power lines PL4, NL4 are connected, respectively. Battery 4 is a secondary battery such as a nickel hydride battery or a lithium ion battery, for example.

Inverter 2 receives a DC power supply voltage from power lines PL2, NL2 and drives AC motor 8. Further, inverter 2 returns electric power generated in AC motor 8 by regenerative braking to battery 4 via power lines PL2, NL2.

AC motor 8 is a motor generating a torque for driving drive wheels 7 of the vehicle. In a case where the motor is mounted in, for example, a hybrid vehicle, the motor may be the one which has a capability as a generator driven by an engine and also can operate as an electric motor for the engine and start the engine.

Inverter 2 includes a U phase arm UA, a V phase arm VA, and a W phase arm WA connected in parallel between power lines PL2, NL2.

U phase arm UA includes switching elements 11, 12 connected in series between power lines PL2, NL2, and diodes 21, 22 connected in antiparallel with switching elements 11, 12, respectively. V phase arm VA includes switching elements 13, 14 connected in series between power lines PL2, NL2, and diodes 23, 24 connected in antiparallel with switching elements 13, 14, respectively. W phase arm WA includes switching elements 15, 16 connected in series between power lines PL2, NL2, and diodes 25, 26 connected in antiparallel with switching elements 15, 16, respectively.

A connection node N1 of switching elements 11, 12 is connected to one end of a U phase coil of motor 8. A connection node N2 of switching elements 13, 14 is connected to one end of a V phase coil of motor 8. A connection node N3 of switching elements 15, 16 is connected to one end of a W phase coil (reference sign is not shown) of motor 8. The other ends of the U phase coil, the V phase coil, and the W phase coil are coupled together to a neutral point.

It is noted that, as switching elements 11 to 16, for example, IGBT elements, power MOSFETs, or the like can be used.

Power supply device 10 for the vehicle further includes a coil L1 and a relay RB1 connected in series between node N3 and power line PL4. Relay RB1 becomes conductive when electric power is supplied/received between battery 4 and the outside of the vehicle. Coil L1 and W phase arm WA constitute a voltage converter.

Relays RA1, RA2, and RB1 to RB3 receive a control signal from a control device 30 to constitute a connection switching unit 3 switching connection relations among battery 4, connector 34, inverter 2, and coil L1.

Since relay RB1 serving as a switch is provided in series with coil L1 as described above, no current flows to coil L1 when relay RB1 is switched OFF. In this case, control is executed such that inverter 2 drives motor 8 as usual.

On the other hand, when relay RB1 is switched ON, relay RA1 is controlled to be in an OFF state, and relays RB2, RB3, and RA2 are controlled to be in an ON state. By appropriately adjusting a duty ratio at which switching elements 15, 16 are turned on/off in a complementary manner in this state, DC/DC voltage conversion can be performed between a voltage between power lines PL4, NL4 (voltage of battery 4) and a voltage between power lines PL3, NL3 of connector 34. Further, since voltage conversion can be performed using a portion of inverter 2 on the vehicle side, such a circuit does not have to be provided on an external charging equipment side, and thus the external charging equipment can be provided at low cost and with high safety. If switching elements 11 to 14 are fixed in an OFF state on this occasion, a current generating the torque of motor 8 does not flow to a stator coil of motor 8 even in a case where motor 8 is not decoupled from the inverter. Therefore, it is not necessary to provide a switch for decoupling motor 8 from inverter 2, which is advantageous for reducing the number of parts. It is noted that another relay may be additionally provided on a path connecting node N3 with the W phase coil to establish a configuration capable of decoupling the W phase coil from node N3.

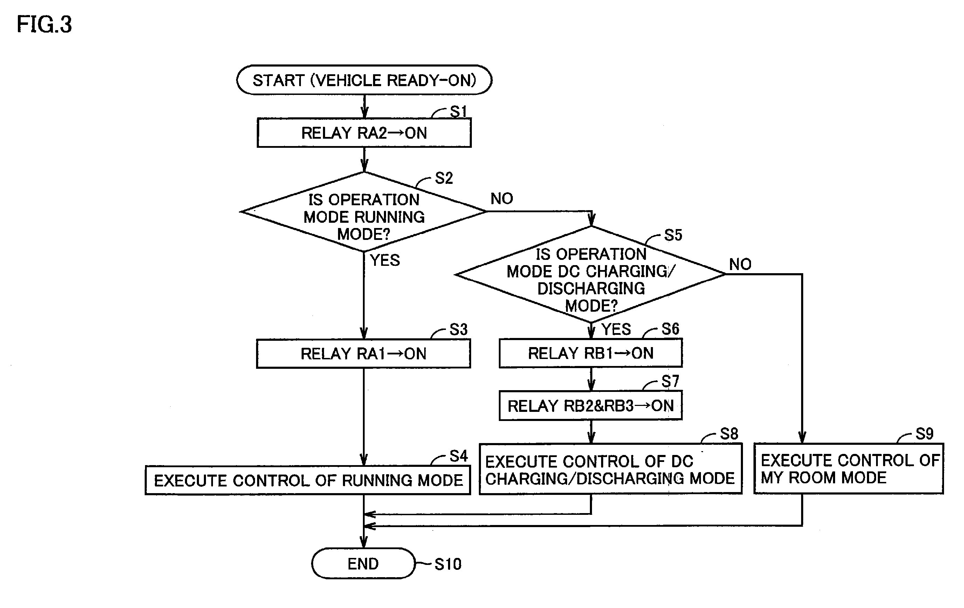

Fig. 3 is a flowchart for illustrating control executed by control device 30 in Fig. 2. Referring to Figs. 2 and 3, execution of processing in the flowchart is started when the vehicle is activated using a start switch or the like. When the start switch is depressed, the vehicle is activated and enters a Ready-ON state in which a character display lamp "Ready" lights up in an operation panel portion of the vehicle. In this state, the vehicle can run.

Firstly, in step S1, control device 30 controls relay RA2 to be in an ON state. Subsequently, in step S2, control device 30 determines whether or not the operation mode of the vehicle is a running mode. While various methods are considerable as a method for determining the operation mode, for example, the operation mode may be determined by reading the setting of a switch provided to allow a user to designate a mode. Alternatively, if there is a connection to connector 34, the operation mode may be determined to be a charging mode, and if not, the operation mode may be determined to be a running mode. Further, the operation mode may be determined based on whether or not the shift range of the vehicle is the parking range, in combination with the presence or absence of a connection to connector 34.

If it is determined in step S2 that the operation mode is the running mode, the processing proceeds to step S3. If it is determined in step S2 that the operation mode is not the running mode, the processing proceeds to step S5.

When the processing proceeds to step S3, relay RA1 is controlled to be in an ON state, and then control device 30 executes control of the running mode in step S4. In the control of the running mode, for example, control device 30 turns on/off the phase arms in inverter 2 by PWM control to rotate motor 8.

When the processing proceeds from step S2 to step S5, it is determined in step S5 whether or not the operation mode is a DC charging/discharging mode.

If it is determined in step S5 that the operation mode is the DC charging/discharging mode, the processing proceeds to step S6. If it is determined in step S5 that the operation mode is not the DC charging/discharging mode, the processing proceeds to step S9.

When the processing proceeds to step S6, relay RB1 is controlled to be in an ON state, and subsequently in step S7, relay RB2 and relay RB3 are controlled to be in an ON state. Then, in step S8, control device 30 executes control of the DC charging/discharging mode. In the control of the DC charging/discharging mode, for example, control device 30 turns on/off switching elements 15, 16 of W phase arm WA in inverter 2 in a complementary manner so as to boost the voltage of battery 4 and output it from connector 34, or to buck the voltage received at connector 34 and use it to charge battery 4. It is noted that switching elements 15, 16 do not necessarily have to be turned on/off in a complementary manner, and only one of them may be turned on/off and a current may be caused to flow to the other by the diode connected in antiparallel therewith.

It is noted that, when the processing proceeds from step S5 to step S9, control of a "my room mode" is executed. The my room mode is set such that auxiliary machines such as an audio device and an air conditioner can be used in a state where the vehicle is not running and does not perform external charging/discharging.

When any of processes in steps S4, S8, and S9 is terminated, the processing in the flowchart is terminated in step S10.

As described above, in the power supply system for the vehicle in Embodiment 1, power lines PL2, NL2 are used as points extended to connector 34 for charging/discharging electric power from/to the outside of the vehicle, and relays RB2, RB3 for connecting connector 34 to power lines PL2, NL2 are provided, as shown in Fig. 2.

Further, during DC charging/discharging, power line PL4 on the positive electrode side of battery 4 is connected, via coil L1, to intermediate node N3 in W phase arm WA, which is one of the three phase arms in running inverter 2.

In this configuration, it is not necessary to provide a switch for decoupling motor 8 from inverter 2, which is advantageous for reducing the number of parts.

Further, since voltage conversion can be performed using a portion of inverter 2 on the vehicle side, such a circuit does not have to be provided on the external charging equipment side, and thus the external charging equipment can be provided at low cost and with high safety.

### [Embodiment 2]

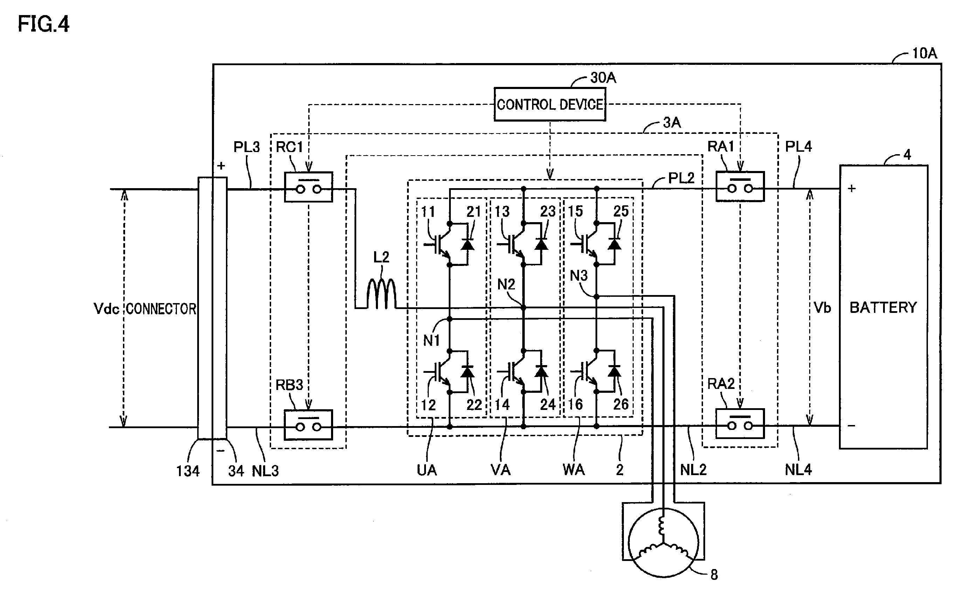

Fig. 4 is a circuit diagram showing a configuration of a power supply device for a vehicle in Embodiment 2. The power supply device for the vehicle in Embodiment 2 is used in a case where the in-vehicle battery has voltage Vb higher than DC link voltage Vdc in Fig. 1.

Referring to Fig.4, a power supply device 10A for the vehicle includes connector 34 for connecting to connector 134 in Fig. 1, relay RB3 for connecting power line NL3 connected to connector 34 to power line NL2, and inverter 2 connected to power lines PL2, NL2. Since the configuration of inverter 2 has been described in Fig. 2, the description thereof will not be repeated.

Power supply device 10A for the vehicle further includes relays RA1, RA2 for connecting power lines PL2, NL2 to power lines PL4, NL4, respectively, and battery 4 having a positive electrode and a negative electrode to which power lines PL4, NL4 are connected, respectively. Battery 4 is a secondary battery such as a nickel hydride battery or a lithium ion battery, for example.

The power supply system for the vehicle further includes a coil L2 having one end connected to intermediate node N2 in V phase arm VA, and a relay RC1 connected between the other end of coil L2 and power line PL3.

Relays RA1, RA2, RB3, and RC1 receive a control signal from a control device 30A to constitute a connection switching unit 3A switching connection relations among battery 4, connector 34, inverter 2, and coil L2.

In power supply device 10A for the vehicle of Fig. 4, a voltage conversion circuit constituted by running inverter 2 and coil L2 bucks the voltage from battery 4 and supplies it to connector 34.

Thus, according to Embodiment 2, the same effect as that in Embodiment 1 can be obtained in the case of battery voltage Vb > Vdc.

### [Embodiment 3]

A power supply device for a vehicle in Embodiment 3 can be used in both cases where the in-vehicle battery has voltage Vb higher than DC link voltage Vdc in Fig. 1, and where the in-vehicle battery has voltage Vb lower than DC link voltage Vdc in Fig. 1.

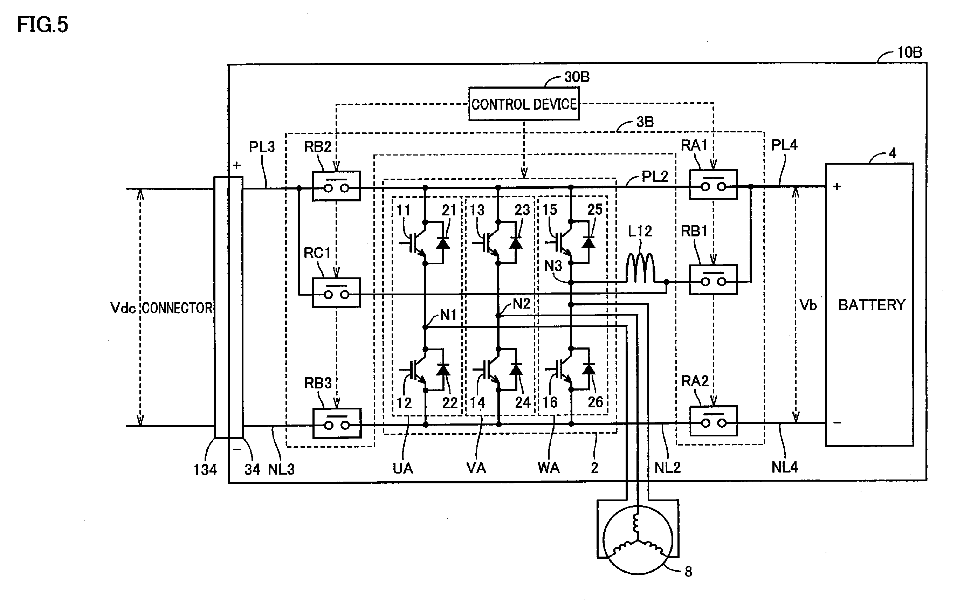

Fig. 5 is a circuit diagram showing a configuration of a first example of a power supply device for a vehicle in Embodiment 3.

Referring to Fig. 5, a power supply device 10B for the vehicle includes connector 34 for connecting to connector 134 in Fig. 1, relays RB2, RB3 for connecting power lines PL3, NL3 connected to connector 34 to power lines PL2, NL2, respectively, and inverter 2 connected to power lines PL2, NL2. Since the configuration of inverter 2 has been described in Fig. 2, the description thereof will not be repeated.

Power supply device 10B for the vehicle further includes relays RA1, RA2 for connecting power lines PL2, NL2 to power lines PL4, NL4, respectively, and battery 4 having a positive electrode and a negative electrode to which power lines PL4, NL4 are connected, respectively. Battery 4 is a secondary battery such as a nickel hydride battery or a lithium ion battery, for example.

Power supply device 10 for the vehicle further includes a coil L12 and relay RB1 connected in series between node N3 and power line PL4, and relay RC1 provided between power line PL3 and a connection node of coil L12 and relay RB1. Coil L12 and W phase arm WA constitute a voltage converter. Relay RB1 becomes conductive when electric power is supplied/received between battery 4 and the outside of the vehicle in the case of Vb < Vdc. Relay RC1 becomes conductive when electric power is supplied/received between battery 4 and the outside of the vehicle in the case of Vb > Vdc.

Relays RA1, RA2, RB1 to RB3, and RC1 receive a control signal from a control device 30B to constitute a connection switching unit 3B switching connection relations among battery 4, connector 34, inverter 2, and coil L2. Although not shown, control device 30B receives measurement values of voltages Vb, Vdc from a voltage sensor which detects voltage Vb of battery 4 and a voltage sensor which detects DC link voltage Vdc input to connector 34 and determines a magnitude relation therebetween, and then switches connection switching unit 3B in accordance with the magnitude relation to change a circuit configuration of the power supply device. It is noted that, even when the measurement values are not input from the voltage sensors, the values of voltages Vb, Vdc may be input to control device 30B using a setting switch or the like.

In power supply device 10B for the vehicle of Fig. 4, in the case of battery voltage Vb < Vdc, a voltage conversion circuit constituted by running inverter 2 and coil L12 boosts the voltage from battery 4 and supplies it to connector 34.

Further, in power supply device 10B for the vehicle, in the case of battery voltage Vb > Vdc, the voltage conversion circuit constituted by running inverter 2 and coil L12 bucks the voltage from battery 4 and supplies it to connector 34.

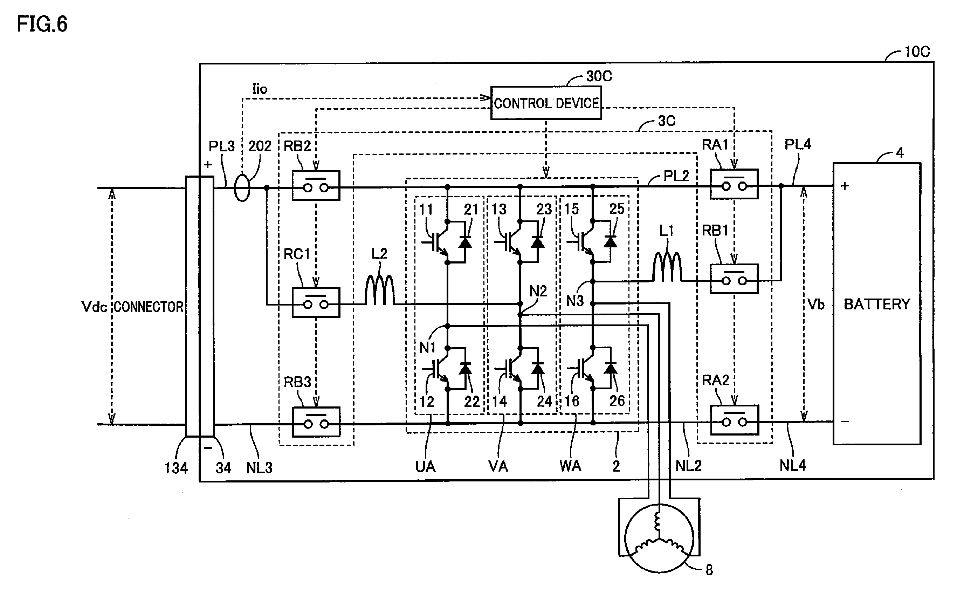

Fig. 6 is a circuit diagram showing a configuration of a second example of the power supply device for the vehicle in Embodiment 3.

Referring to Fig. 6, a power supply device 10C for the vehicle includes connector 34 for connecting to connector 134 in Fig. 1, relays RB2, RB3 for connecting power lines PL3, NL3 connected to connector 34 to power lines PL2, NL2, respectively, and inverter 2 connected to power lines PL2, NL2. Since the configuration of inverter 2 has been described in Fig. 2, the description thereof will not be repeated.

Power supply device 10C for the vehicle further includes relays RA1, RA2 for connecting power lines PL2, NL2 to power lines PL4, NL4, respectively, and battery 4 having a positive electrode and a negative electrode to which power lines PL4, NL4 are connected, respectively. Battery 4 is a secondary battery such as a nickel hydride battery or a lithium ion battery, for example.

Power supply device 10C for the vehicle further includes coil L1 and relay RB1 connected in series between node N3 and power line PL4, coil L2 and relay RC1 connected in series between node N2 and power line PL3, and a current sensor 202 which detects a current in power line PL3.

Coil L1 and W phase arm WA constitute a first voltage converter. Coil L2 and V phase arm VA constitute a second voltage converter.

Relay RB1 becomes conductive when electric power is supplied/received between battery 4 and the outside of the vehicle in the case of Vb < Vdc. Relay RC1 becomes conductive when electric power is supplied/received between battery 4 and the outside of the vehicle in the case of Vb > Vdc.

Relays RA1, RA2, RB1 to RB3, and RC1 receive a control signal from a control device 30C to constitute a connection switching unit 3C switching connection relations among battery 4, connector 34, inverter 2, and coil L2. Although not shown, control device 30C receives measurement values of voltages Vb, Vdc from a voltage sensor which detects voltage Vb of battery 4 and a voltage sensor which detects DC link voltage Vdc input to connector 34 and determines a magnitude relation therebetween, and then switches connection switching unit 3C in accordance with the magnitude relation to change a circuit configuration of the power supply device. It is noted that, even when the measurement values are not input from the voltage sensors, the values of voltages Vb, Vdc may be input to control device 30C using a setting switch or the like.

In power supply device 10C for the vehicle of Fig. 6, in the case of battery voltage Vb < Vdc, a voltage conversion circuit constituted by running inverter 2 and coil L1 boosts the voltage from battery 4 and supplies it to connector 34.

Further, in power supply device 10C for the vehicle, in the case of battery voltage Vb > Vdc, a voltage conversion circuit constituted by running inverter 2 and coil L2 bucks the voltage from battery 4 and supplies it to connector 34.

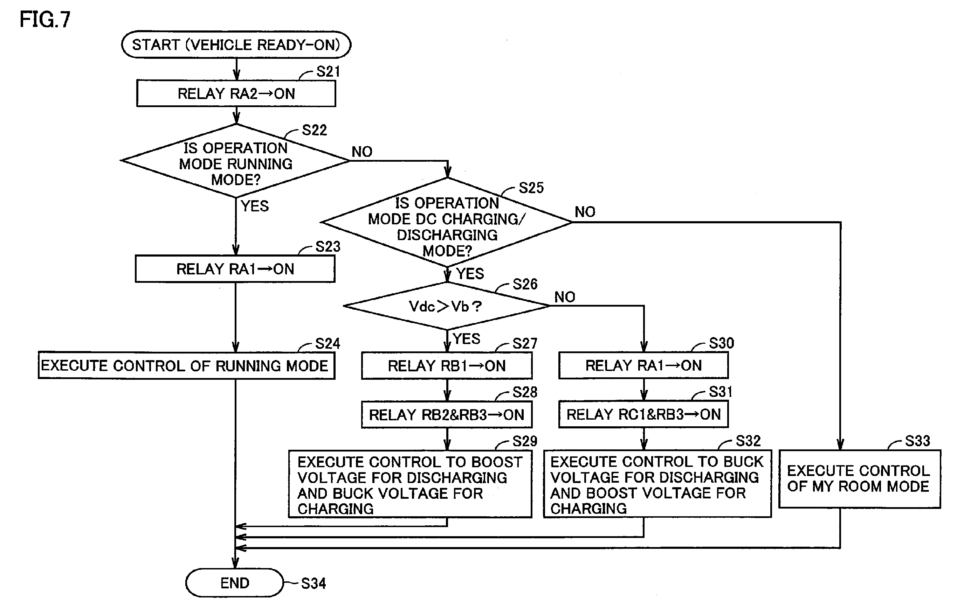

Fig. 7 is a flowchart for illustrating control executed by control device 30C in Fig. 6. Referring to Figs. 6 and 7, execution of processing in the flowchart is started when the vehicle is activated using a start switch or the like. When the start switch is depressed, the vehicle is activated and enters a Ready-ON state in which a character display lamp "Ready" lights up in an operation panel portion of the vehicle. In this state, the vehicle can run.

Firstly, in step S21, control device 30A controls relay RA2 to be in an ON state. Subsequently, in step S22, control device 30A determines whether or not the operation mode of the vehicle is a running mode. While various methods are considerable as a method for determining the operation mode, for example, the operation mode may be determined by reading the setting of a switch provided to allow a user to designate a mode. Alternatively, if there is a connection to connector 34, the operation mode may be determined to be a charging mode, and if not, the operation mode may be determined to be a running mode. Further, the operation mode may be determined based on whether or not the shift range of the vehicle is the parking range, in combination with the presence or absence of a connection to connector 34.

If it is determined in step S22 that the operation mode is the running mode, the processing proceeds to step S23. If it is determined in step S22 that the operation mode is not the running mode, the processing proceeds to step S25.

When the processing proceeds to step S23, relay RA1 is controlled to be in an ON state, and then control device 30A executes control of the running mode in step S24. In the control of the running mode, for example, control device 30A turns on/off the phase arms in inverter 2 by PWM control to rotate motor 8.

When the processing proceeds from step S22 to step S25, it is determined in step S25 whether or not the operation mode is a DC charging/discharging mode.

If it is determined in step S25 that the operation mode is the DC charging/discharging mode, the processing proceeds to step S26. If it is determined in step S25 that the operation mode is not the DC charging/discharging mode, the processing proceeds to step S33.

When the processing proceeds to step S26, magnitudes of external voltage Vdc and battery voltage Vb are determined. If it is determined that Vdc > Vb, the processing proceeds to step S27. If Vdc > Vb is not satisfied, the processing proceeds to step S30.

When the processing proceeds to step S27, relay RB1 is controlled to be in an ON state, and subsequently in step S28, relay RB2 and relay RB3 are controlled to be in an ON state. Then, in step S29, control device 30C executes control of the DC charging/discharging mode. In the control of the DC charging/discharging mode, for example, control device 30C turns on/off switching elements 15, 16 of W phase arm WA in inverter 2 in a complementary manner so as to boost voltage Vb of battery 4 to DC link voltage Vdc and output it from connector 34, or to buck DC link voltage Vdc received at connector 34 and use it to charge battery 4. It is noted that switching elements 15, 16 do not necessarily have to be turned on/off in a complementary manner, and only one of them may be turned on/off and a current may be caused to flow to the other by the diode connected in antiparallel therewith.

On the other hand, if the processing proceeds from step S26 to step S30, relay RA1 is controlled to be in an ON state, and subsequently in step S31, relay RC1 and relay RB3 are controlled to be in an ON state. Then, in step S32, control device 30C executes control of the DC charging/discharging mode. In the control of the DC charging/discharging mode, for example, control device 30C turns on/off switching elements 13, 14 of V phase arm VA in inverter 2 in a complementary manner so as to buck voltage Vb of battery 4 to DC link voltage Vdc and output it from connector 34, or to boost DC link voltage Vdc received at connector 34 and use it to charge battery 4. It is noted that switching elements 15, 16 do not necessarily have to be turned on/off in a complementary manner, and only one of them may be turned on/off and a current may be caused to flow to the other by the diode connected in antiparallel therewith.

It is noted that, when the processing proceeds from step S25 to step S33, control of a "my room mode" is executed. The my room mode is set such that auxiliary machines such as an audio device and an air conditioner can be used in a state where the vehicle is not running and does not perform external charging/discharging.

When any of processes in steps S24, S29, S32, and S33 is terminated, the processing in the flowchart is terminated in step S34.

In addition to the effects exhibited by the power supply devices for the vehicle in Embodiments 1 and 2, in the power supply device for the vehicle in Embodiment 3, control device 30B, 30C determines the magnitude relation between battery voltage Vb and DC link voltage Vdc even in a case where the magnitude relation may be reversed, and changes the circuit configuration appropriately and performs a voltage conversion operation. Thereby, even in the case where the magnitude relation between battery voltage Vb and DC link voltage Vdc may be reversed, electric power can be charged into battery 4 of the vehicle and drawn from battery 4 of the vehicle to the outside in an appropriate manner.

### [Other Variations]

Hereinafter, variations for increasing the capacity of electric power for DC charging/discharging will be described.

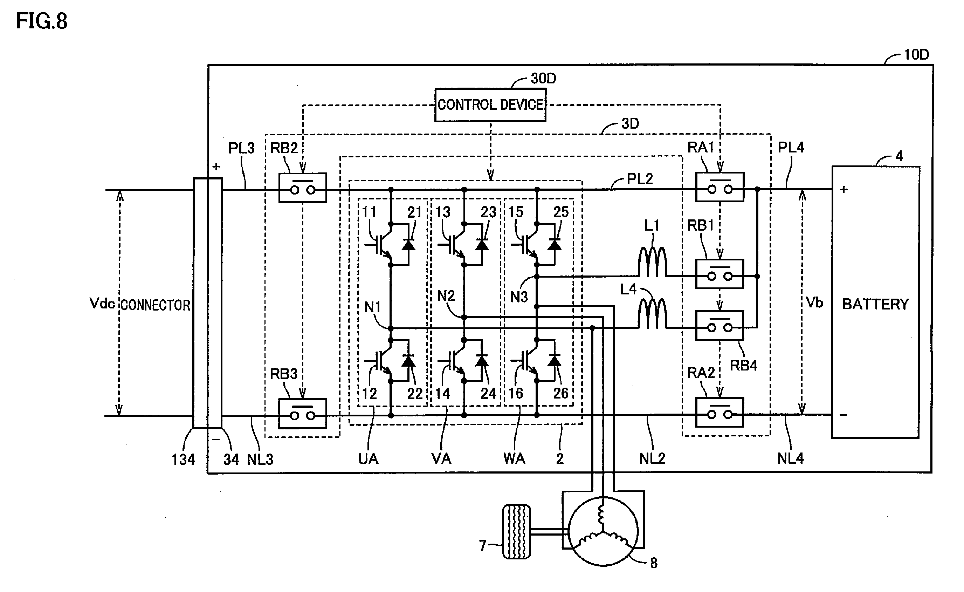

Fig. 8 is a circuit diagram showing a configuration of a first variation for increasing the capacity of electric power.

In addition to power supply device 10 for the vehicle shown in Fig. 2, a power supply device 10D for a vehicle shown in Fig. 8 further includes a coil L4 and a relay RB4 connected in series between node N1 and power line PL4. Other than that, the configuration of power supply device 10D for the vehicle is the same as that of power supply device 10 for the vehicle described in Fig. 2, and thus the description thereof will not be repeated.

In power supply device 10D for the vehicle, a current which is double that in power supply device 10 shown in Fig. 2 can flow. Further, a circuit configuration may be changed in accordance with the current such that, if there is a small current, only one of relays RB1, RB4 is set in an ON state, and if a large current is required, both of relays RB1, RB4 are set in an ON state.

It is noted that, in the configuration of Fig. 8, another relay may be additionally provided on a path connecting node N2 with the V phase coil to establish a configuration capable of decoupling the V phase coil from node N2.

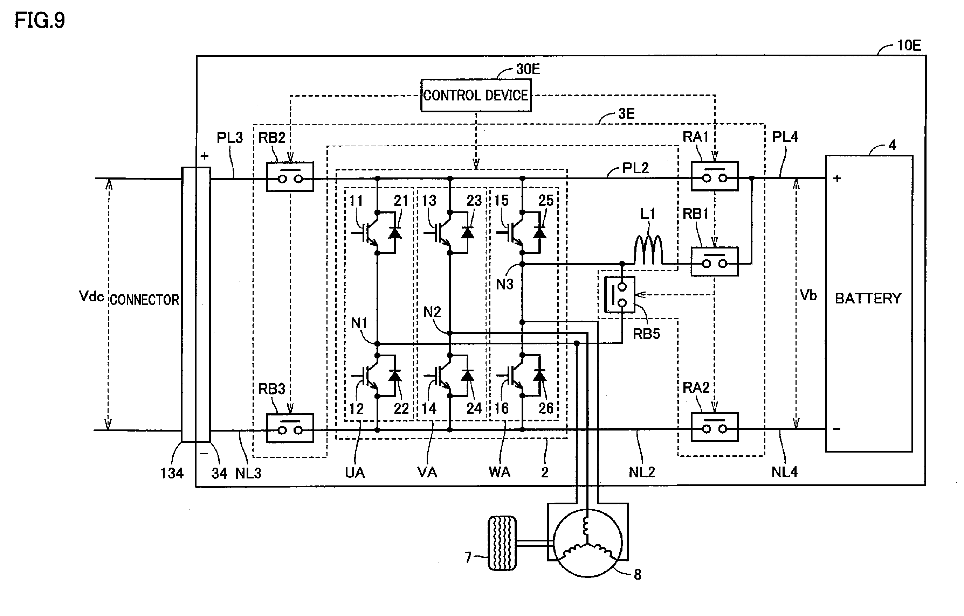

Fig. 9 is a circuit diagram showing a configuration of a second variation for increasing the capacity of electric power.

In addition to power supply device 10 for the vehicle shown in Fig. 2, a power supply device 10E for a vehicle shown in Fig. 9 further includes a relay RB5 connected between node N1 and node N3. Other than that, the configuration of power supply device 10E for the vehicle is the same as that of power supply device 10 for the vehicle described in Fig. 2, and thus the description thereof will not be repeated.

The example shown in Fig. 9 is effective in a case where an allowable current for each switching element in inverter 2 is small relative to an allowable current which can flow through coil L1. In such a case, it is only necessary to cause relay RB5 to become conductive to connect W phase arm WA and U phase arm UA in parallel with coil L1, and turn on/off two switching elements simultaneously. It is noted that, as long as a plurality of arms are selected from the U, V, and W phase arms, another combination may be used.

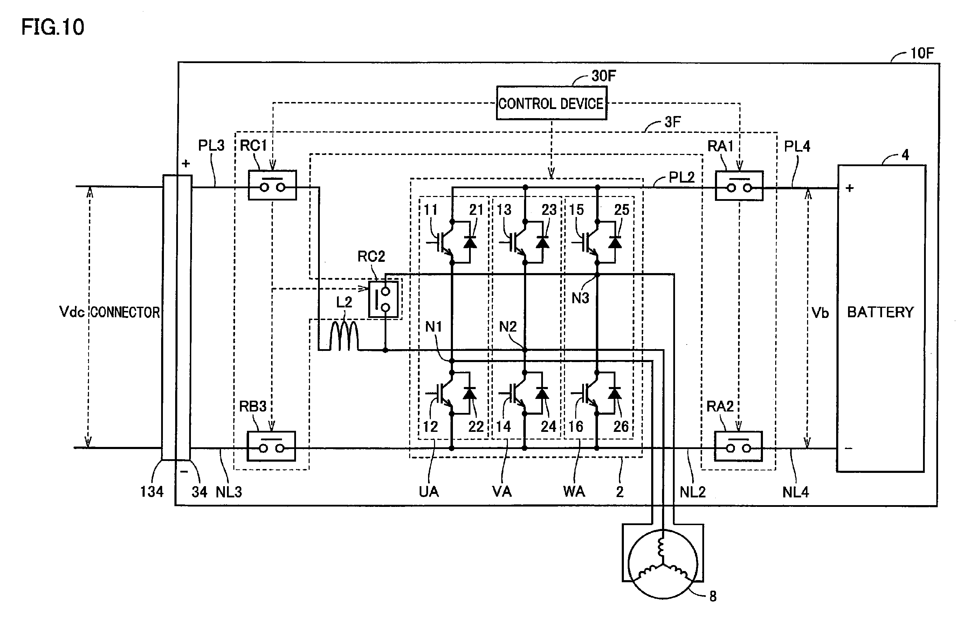

Fig. 10 is a circuit diagram showing a configuration of a third variation for increasing the capacity of electric power.

In addition to power supply device 10A for the vehicle shown in Fig. 4, a power supply device 10F for a vehicle shown in Fig. 10 further includes a relay RC2 connected between node N2 and node N3. Other than that, the configuration of power supply device 10F for the vehicle is the same as that of power supply device 10A for the vehicle described in Fig. 4, and thus the description thereof will not be repeated.

The example shown in Fig. 10 is effective in a case where an allowable current for each switching element in inverter 2 is small relative to an allowable current which can flow through coil L1, as in Fig. 9. In such a case, it is only necessary to cause relay RC1 to become conductive to connect W phase arm WA and V phase arm VA in parallel with coil L2, and turn on/off two switching elements simultaneously. It is noted that, as long as a plurality of arms are selected from the U, V, and W phase arms, another combination may be used.

Although the present embodiment has described a form using a relay as one example of a switch, another switch such as a semiconductor power element, for example, may be used instead of a relay. Further, various modifications are considerable with respect to the position for providing a switch. For example, the position of a relay may be modified to a position opposite to a reactor if the relay can interrupt a current of the reactor.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

### REFERENCE SIGNS LIST

1: vehicle; 2: inverter; 3, 3A, 3B, 3C: connection switching unit; 4, 106: battery; 7: drive wheel; 8: motor; 10, 10A to 10F: power supply device; 11 to 16: switching element; L1, L2, L4, L12: coil; 21 to 26: diode; 30, 30A to 30C: control device; 34, 134: connector; 102: commercial AC power supply; 104: power conditioner; 122: transformer; 126: PV-converter; 128: capacitor; 130, 132, RA1, RA2, RB1 to RB5, RC1, RC2: relay; 202: current sensor; NL, NL2, NL3, NL4, PL, PL2, PL3, PL4: power line; UA, VA, WA: arm.

## Claims

1. A power supply device for a vehicle, comprising:
a power storage device (4);
a connector (34) to which a power cable can be connected from outside of the vehicle;
an inverter (2) for operating a rotating electric machine;
a coil (L1; L2; L12) provided separately from a stator coil of said rotating electric machine; and
a connection switching unit (3; 3A; 3B; 3C) switching connection relations among said power storage device, said connector, said inverter, and said coil,
in a first operation mode, said connection switching unit setting the connection relation such that electric power from said power storage device is supplied to said inverter and said rotating electric machine can be driven without using said coil, and in a second operation mode, said connection switching unit setting the connection relation such that said coil and said inverter are used to constitute a voltage conversion circuit and voltage conversion can be performed between a voltage of said connector and a voltage of said power storage device.

2. The power supply device for the vehicle according to claim 1, further comprising a positive power line (PL2) and a negative power line (NL2) supplying electric power to said inverter, wherein
said inverter includes arms (UA, VA, WA) of a plurality of phases connected in parallel between said positive power line and said negative power line,
each of said arms of the plurality of phases has first and second switching elements (11 to 16) connected in series between said positive power line and said negative power line,
said connection switching unit includes a first switch (RB1; RC1) which causes, when said first switch becomes conductive in said second operation mode, one end of said coil to be connected to an intermediate node (N3; N2) of said first and second switching elements (15, 16; 13, 14) of a first arm (WA; VA) of said arms of the plurality of phases, and the other end of said coil to be connected to said power storage device or said connector, and
when said first switch becomes nonconductive in said first operation mode, said coil does not constitute said voltage conversion circuit.

3. The power supply device for the vehicle according to claim 2, wherein
said first switch (RB1) is provided between the other end of said coil (L1) and a positive electrode (PL4) of said power storage device,
said connection switching unit (3) further includes a second switch (RA1) provided between said positive power line and the positive electrode of said power storage device, and
said power supply device for the vehicle further comprises a control device (30) which controls said first switch to be in an OFF state and controls said second switch to be in an ON state in said first operation mode, and controls said first switch to be in an ON state and controls said second switch to be in an OFF state in said second operation mode.

4. The power supply device for the vehicle according to claim 3, wherein
said connection switching unit (3) further includes
a third switch (RB2) provided between said positive power line and a positive terminal of said connector, and
a fourth switch (RB3) provided between said negative power line and a negative terminal of said connector, and
said control device (30) causes said third and fourth switches to become conductive in said second operation mode.

5. The power supply device for the vehicle according to claim 2, wherein
said first switch (RC1) is provided between the other end of said coil and a positive terminal (PL3) of said connector, and
said power supply device for the vehicle further comprises a control device (30A) which controls said first switch to be in an OFF state in said first operation mode, and controls said first switch to be in an ON state in said second operation mode.

6. The power supply device for the vehicle according to claim 5, wherein
said connection switching unit (3A) further includes a second switch (RB3) provided between said negative power line and a negative terminal of said connector, and
said control device (30A) causes said second switch to become conductive in said second operation mode.

7. The power supply device for the vehicle according to claim 1, further comprising a control device (30B, 30C) which controls said connection switching unit (3B, 3C), wherein
said control device switches whether to cause said voltage conversion circuit to operate as a boost circuit or as a buck circuit, based on the voltage of said connector and the voltage of said power storage device.

8. The power supply device for the vehicle according to claim 7, wherein said control device (30B) switches whether to form said boost circuit or said buck circuit using said coil (L12) and said inverter (2), based on the voltage of said connector and the voltage of said power storage device.

9. The power supply device for the vehicle according to claim 7, further comprising:
a second coil (L2) provided separately from the stator coil of said rotating electric machine and said coil (L1); and
a positive power line (PL2) and a negative power line (NL2) supplying electric power to said inverter, wherein
said inverter includes arms (UA, VA, WA) of a plurality of phases connected in parallel between said positive power line and said negative power line,
each of said arms of the plurality of phases has first and second switching elements (11 to 16) connected in series between said positive power line and said negative power line,
said connection switching unit includes
a first switch (RB 1) which causes, when said first switch becomes conductive in said second operation mode, one end of said coil (L1) to be connected to an intermediate node (N3) of said first and second switching elements of a first arm (WA) of said arms of the plurality of phases, and the other end of said coil to be connected to said power storage device, and
a second switch (RC1) which causes, when said second switch becomes conductive in said second operation mode, one end of said second coil (L2) to be connected to an intermediate node (N2) of said first and second switching elements of a second arm (VA) of said arms of the plurality of phases, and the other end of said second coil to be connected to said connector, and
when said first and second switches (RB 1, RC 1) become nonconductive in said first operation mode, no current flows to said coil and said second coil.
